# EUROPEAN PATENT APPLICATION

(11) **EP 4 779 488 A1**
(43) Date of publication of application: **22.07.2026**
(21) Application number: 24867087.9
(22) Date of filing: 24.07.2024
(51) Int. Cl.: G06F 16/2453

(54) **METHOD FOR LOADING OPERATOR, METHOD FOR SEARCHING FOR OPERATOR, AND APPARATUS, DEVICE AND MEDIUM**

(30) Priority: 22.09.2023 CN 202311238703
(71) Applicant: HUAWEI TECHNOLOGIES CO., LTD., Shenzhen 518129 (CN)
(72) Inventor: XIAO, Xiong, Shenzhen, Guangdong 518129 (CN); DENG, Lian, Shenzhen, Guangdong 518129 (CN); FENG, Rui, Shenzhen, Guangdong 518129 (CN)
(74) Representative: Thun, Clemens
(86) International application number: PCT/CN2024/107243
(87) International publication number: WO 2025/060670

(57) **Abstract**

Provided are a method for loading an operator, a method for searching for an operator, an apparatus, a device, and a medium. These relate to the field of deep learning technologies. The method is applied to a host, the host is externally connected to a compute unit, and the method includes: obtaining an identifier of a target operator; obtaining, from the identifier of the target operator, indexes of the target operator in n layers of service logic; and based on the indexes, searching for service logic corresponding to the target operator across the n layers, and searching for an executable handle bound to n^{th}-layer service logic of the target operator.

## Description

This application claims priority to Chinese Patent Application No. 202311238703.3, filed on September 22, 2023 and entitled "METHOD AND APPARATUS FOR LOADING OPERATOR, METHOD AND APPARATUS FOR SEARCHING FOR OPERATOR, DEVICE, AND MEDIUM", which is incorporated herein by reference in its entirety.

### TECHNICAL FIELD

This application relates to the field of deep learning technologies, and in particular, to a method and an apparatus for loading an operator, a method and an apparatus for searching for an operator, a device, and a medium.

### BACKGROUND

To enhance operator execution efficiency, it is advisable to implement collaborative computation and mutual acceleration between a host (Host) and a compute unit. This requires service logic of an operator to run on both the host and the compute unit. The compute unit includes an external compute unit such as a neural processing unit (neural processing unit, NPU), a graphics processing unit (graphics processing unit, GPU), and a digital signal processor (digital signal processor, DSP). The compute unit is plugged into the host.

### SUMMARY

This application provides a method and an apparatus for loading an operator, a method and an apparatus for searching for an operator, a device, and a medium, so that service logic of an operator can be run on a host and a compute unit.

According to a first aspect, this application provides a method for loading an operator, where the method is applied to a host, the host is connected to an external compute unit, and the method includes: loading first service logic into a memory of the host, where the first service logic is service logic that is run on the host and that is of a to-be-loaded operator of a deep learning model, the first service logic is divided into n layers of service logic based on attributes, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of the to-be-loaded operator, and i is greater than or equal to 1 and is less than or equal to n-1; and loading second service logic into the memory of the host, and loading the second service logic from the memory of the host to a memory of the external compute unit, where the second service logic is service logic that is run on the external compute unit and that is of the to-be-loaded operator.

In the solution of this application, service logic run on the host is hierarchical, and service logic at a lowest layer is bound to an executable handle. Then, when an operator is executed, service logic that is run on the host and that is of the operator can be searched for and executed hierarchically. In addition, the executable handle can be found based on the service logic at the lowest layer, so that service logic that is run on the external compute unit and that is of the operator can be executed. In this way, the operator can be executed on both the host and the external compute unit.

In an optional manner, the method further includes: allocating consecutive identifiers to all pieces of service logic at a first layer in the n layers; and allocating consecutive identifiers to pieces of service logic at the (i+1)^{th} layer that are subordinate to any one piece of service logic at the i^{th} layer. In this way, the identifiers are allocated in this manner, so that the operator can be searched for in sequence, reducing duration of searching for the operator.

In an optional manner, the method further includes: obtaining an identifier of a target operator among to-be-loaded operators; obtaining, from the identifier of the target operator, indexes of the target operator in the n layers of service logic; and based on the indexes, searching for service logic corresponding to the target operator across the n layers, and searching for an executable handle bound to n^{th}-layer service logic of the target operator.

In the solution of this application, indexes in the n layers of service logic are determined based on an identifier of an operator; and based on the indexes and a relationship of service logic between adjacent layers, service logic corresponding to the operator at the n layers is found, and an executable handle bound to n^{th}-layer service logic of the target operator is found. This requires no hash calculation or hash collision resolution, so that quick searching for an operator can be implemented, thereby reducing overall time for operator access and execution.

In an optional manner, obtaining the identifier of the target operator among the to-be-loaded operators includes: obtaining the cached identifier of the target operator. In this way, when an identifier of an operator already exists, there is no need to determine the identifier of the operator again, so that duration of searching for the operator can be reduced.

In an optional manner, before obtaining the cached identifier of the target operator, the method further includes: determining, layer by layer, optimal service logic of the target operator in the n layers of service logic based on parameter information of the target operator, where the parameter information includes one or more of a specific parameter, a data format, or a data type used by the target operator, and a tensor shape, and identifiers of the optimal service logic of the target operator form the identifier of the target operator according to a hierarchical sequence of the n layers; and caching the identifier of the target operator. In the solution of this application, an identifier of an operator is searched for and cached based on parameter information of the operator. In this way, when the operator is subsequently searched for again, there is no need to determine the identifier of the operator again, so that duration of searching for the operator can be reduced.

In an optional manner, based on the indexes, searching for the service logic corresponding to the target operator across the n layers, and searching for the executable handle bound to the n^{th}-layer service logic of the target operator includes: obtaining n information tables corresponding to the n layers of service logic, where an information table corresponding to service logic at the i^{th} layer includes information about each piece of service logic at the i^{th} layer, for each piece of service logic at the i^{th} layer, the information about the service logic includes storage address information of the service logic and address information of an information sub-table, and the information sub-table includes information about service logic at the (i+1)^{th} layer that is subordinate to the service logic; and an information table at the n^{th} layer includes information about each piece of service logic at the n^{th} layer, and for each piece of service logic at the n^{th} layer, the information about the service logic includes storage address information of the service logic and an executable handle bound to the service logic; and based on the n information tables and the indexes, searching for the service logic corresponding to the target operator across the n layers, and searching for the executable handle bound to the n^{th}-layer service logic of the target operator.

In the solution of this application, the n layers of service logic corresponds to the information tables. Because the information table records information about the service logic, based on the information tables and the indexes, service logic corresponding to an operator across the n layers can be quickly found, and an executable handle bound to n^{th}-layer service logic of the target operator can be found, reducing duration of searching for the operator.

According to a second aspect, this application provides a method for searching for an operator, where the method is applied to a host, the host is connected to an external compute unit, and the method includes: obtaining an identifier of a target operator; obtaining, from the identifier of the target operator, indexes of the target operator in n layers of service logic, where the n layers of service logic is run on the host, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of an operator, and i is greater than or equal to 1 and is less than or equal to n-1; and based on the indexes, searching for service logic corresponding to the target operator across the n layers, and searching for an executable handle bound to n^{th}-layer service logic of the target operator.

In the solution of this application, service logic run on the host is hierarchical, and service logic at a lowest layer is bound to an executable handle. Then, when an operator is executed, service logic that is run on the host and that is of the operator can be searched for and executed hierarchically. In addition, the executable handle can be found based on the service logic at the lowest layer, so that service logic that is run on the external compute unit and that is of the operator can be executed. In this way, the operator can be executed on both the host and the external compute unit. In addition, indexes in the n layers of service logic are determined based on an identifier of an operator; and based on the indexes and a relationship of service logic between adjacent layers, service logic corresponding to the operator at the n layers is found, and an executable handle bound to n^{th}-layer service logic of the target operator is found. This requires no hash calculation or hash collision resolution, so that quick searching for an operator can be implemented, thereby reducing overall time for operator access and execution.

In an optional manner, obtaining the identifier of the target operator includes: obtaining the cached identifier of the target operator. In this way, when an identifier of an operator already exists, there is no need to determine the identifier of the operator again, so that duration of searching for the operator can be reduced.

In an optional manner, before obtaining the cached identifier of the target operator, the method further includes: determining, layer by layer, optimal service logic of the target operator in the n layers of service logic based on parameter information of the target operator, where the parameter information includes one or more of a specific parameter, a data format, or a data type used by the target operator, and a tensor shape, and identifiers of the optimal service logic of the target operator form the identifier of the target operator according to a hierarchical sequence of the n layers; and caching the identifier of the target operator.

In the solution of this application, an identifier of an operator is searched for and cached based on parameter information of the operator. In this way, when the operator is subsequently searched for again, there is no need to determine the identifier of the operator again, so that duration of searching for the operator can be reduced.

In an optional manner, based on the indexes, searching for the service logic corresponding to the target operator across the n layers, and searching for the executable handle bound to the n^{th}-layer service logic of the target operator includes: obtaining n information tables corresponding to the n layers of service logic, where an information table corresponding to service logic at the i^{th} layer includes information about each piece of service logic at the i^{th} layer, for each piece of service logic at the i^{th} layer, the information about the service logic includes storage address information of the service logic and address information of an information sub-table, and the information sub-table includes information about service logic at the (i+1)^{th} layer that is subordinate to the service logic; and an information table at the n^{th} layer includes information about each piece of service logic at the n^{th} layer, and for each piece of service logic at the n^{th} layer, the information about the service logic includes storage address information of the service logic and an executable handle bound to the service logic; and based on the n information tables and the indexes, searching for the service logic corresponding to the target operator across the n layers, and searching for the executable handle bound to the n^{th}-layer service logic of the target operator.

In the solution of this application, the n layers of service logic corresponds to the information tables. Because the information table records information about the service logic, based on the information tables and the indexes, service logic corresponding to an operator across the n layers can be quickly found, and an executable handle bound to n^{th}-layer service logic of the target operator can be found, reducing duration of searching for the operator.

In an optional manner, the method further includes: loading, into a memory of the host, service logic that is run on the host and that is of a to-be-loaded operator of a deep learning model, where the n layers of service logic is obtained by dividing, based on attributes, the service logic that is run on the host and that is of the to-be-loaded operator, and the target operator pertains to the to-be-loaded operator; loading, into the memory of the host, service logic that is run on the external compute unit and that is of the to-be-loaded operator, and loading, from the memory of the host to the external compute unit, the service logic that is run on the external compute unit and that is of the to-be-loaded operator; allocating consecutive identifiers to all pieces of service logic at a first layer in the n layers; and allocating consecutive identifiers to pieces of service logic at the (i+1)^{th} layer that are subordinate to any one piece of service logic at the i^{th} layer.

In the solution of this application, the service logic of the operator used by the deep learning model is loaded in advance to a running location, and the identifier is allocated in this manner, so that the operator can be searched for in sequence, reducing duration of searching for the operator.

In an optional manner, loading, into a memory of the host, service logic that is run on the host and that is of a to-be-loaded operator of a deep learning model includes: when the deep learning model is configured or the deep learning model is run, loading, into the memory of the host, service logic that is run on the host and that is of all operators included in the deep learning model.

According to a third aspect, this application provides an apparatus for loading an operator. The apparatus includes at least one module, and the at least one module is configured to implement the method for loading the operator according to the first aspect or any one of the optional manners in the first aspect.

In some embodiments, the module in the apparatus for loading the operator is implemented by software, and the module in the apparatus for loading the operator is a program module. In some other embodiments, the module in the apparatus for loading the operator is implemented by hardware or firmware.

According to a fourth aspect, this application provides an apparatus for searching for an operator. The apparatus includes at least one module, and the at least one module is configured to implement the method for searching for the operator according to the second aspect or any one of the optional manners in the second aspect.

In some embodiments, the module in the apparatus for searching for the operator is implemented by software, and the module in the apparatus for searching for the operator is a program module. In some other embodiments, the module in the apparatus for searching for the operator is implemented by hardware or firmware.

According to a fifth aspect, this application provides a compute device. The compute device includes a memory and a processor. The processor of the compute device is configured to execute instructions stored in the memory of the compute device, to enable the compute device to perform the method for loading an operator according to the first aspect or any one of the optional manners in the first aspect, or to enable the compute device to perform the method for searching for an operator according to the second aspect or any one of the optional manners in the second aspect.

According to a sixth aspect, this application provides a computer-readable storage medium. The computer-readable storage medium includes computer program instructions. When the computer program instructions are executed by a compute device, the compute device is enabled to perform the method for loading an operator according to the first aspect or any one of the optional manners in the first aspect, or the compute device is enabled to perform the method for searching for an operator according to the second aspect or any one of the optional manners in the second aspect.

According to a seventh aspect, this application provides a computer program product including instructions. When the instructions are executed by a compute device, the compute device is enabled to perform the method for loading an operator according to the first aspect or any one of the optional manners in the first aspect, or the compute device is enabled to perform the method for searching for an operator according to the second aspect or any one of the optional manners in the second aspect.

### BRIEF DESCRIPTION OF DRAWINGS

FIG. 1 is a diagram of a conventional method for searching for an operator;
FIG. 2 is a diagram of a structure of a compute device according to an example embodiment of this application;
FIGS. 3A and 3B are a diagram of hierarchical operator preloading according to an example embodiment of this application;
FIGS. 4A and 4B are a diagram of hierarchical operator lazy-loading according to an example embodiment of this application;
FIG. 5 is a diagram of hierarchical operator loading according to an example embodiment of this application;
FIG. 6 is a diagram of an information table according to an example embodiment of this application;
FIG. 7 is a diagram of calling a target operator for the first time according to an example embodiment of this application;
FIG. 8 is a schematic flowchart of searching for an operator according to an example embodiment of this application;
FIG. 9 is a schematic flowchart of searching for an operator according to an example embodiment of this application;
FIG. 10 is a diagram of a structure of an apparatus for loading an operator according to an example embodiment of this application; and
FIG. 11 is a diagram of a structure of an apparatus for searching for an operator according to an example embodiment of this application.

### DESCRIPTION OF EMBODIMENTS

To make objectives, technical solutions, and advantages of this application clearer, the following further describes implementations of this application in detail with reference to the accompanying drawings.

The following explains and describes some terms and concepts in embodiments of this application.
1. An operator is a function for performing various mathematical operations in a deep learning model. In a case of collaborative computation and mutual acceleration between a host and a compute unit (that is, in a case of heterogeneous programming), the operator usually includes host-side service logic and external device (Device)-side service logic. The host-side service logic is run on the host, and the device-side service logic is run on the external compute unit such as an NPU, a GPU, or a DSP. The external compute unit is connected to the host by a bus. The host-side service logic is binary code that is of the operator and that is run on the host. The device-side service logic is binary code that is of the operator and that is run on the external compute unit.
2. An executable handle (Handle) of the operator is a handle used on the device side to execute a kernel (kernel) function of the operator. The kernel function can be found by using the handle and then executed.

The following describes the background and the conventional technology of this application.

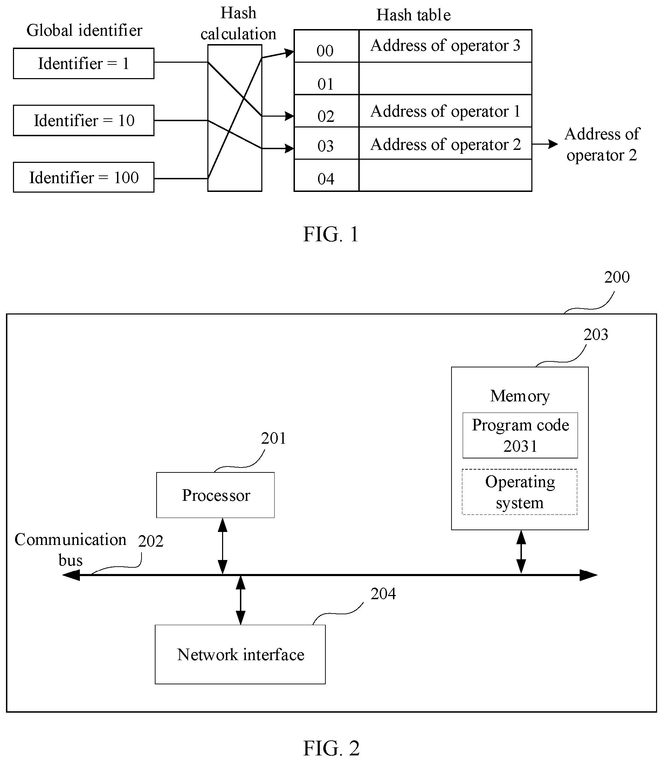

Operators, as the lowest layer of the application software stack, are used by various accelerator cards, inference engines, and training frameworks at upper layers. This requires the operators to be quickly found and run, especially in some inference scenarios where time for searching for operators is strictly limited. In conventional technologies, as shown in FIG. 1, when searching for an operator, a global identifier of the operator is used for a hash calculation. Based on the resulting hash value, the operator is located in a hash table. Hash-based lookup incurs overheads for hash calculation and hash collision resolution. When there is a large quantity of operators, the time spent on resolving hash collisions rapidly increase. In addition, hash-based lookup is not an operation that consumes stable constant time, introducing temporal uncertainty. To address this, in embodiments of this application, indexes of an operator in n layers of service logic is extracted from an identifier of the operator, and an executable handle of the operator is located based on the index at each layer, thereby enabling the execution of the operator. Since there is no need for hash calculation or resolving hash collisions, the time required to find an operator can be reduced.

The following describes an execution body for a method for loading an operator and an execution body for a method for searching for an operator.

The execution body for the method for loading the operator is an apparatus for loading an operator. The apparatus is a host mentioned below, and the host is a compute device such as a terminal or a server. Alternatively, the apparatus is a software apparatus, for example, a set of software programs run on the host.

The execution body for the method for searching for the operator is an apparatus for searching for an operator. The apparatus is a host mentioned below, and the host is a compute device such as a terminal or a server. Alternatively, the apparatus is a software apparatus, for example, a set of software programs run on the host.

As shown in FIG. 2, a compute device 200 is provided. The compute device 200 is optionally implemented by using a general bus architecture. The compute device 200 includes at least one processor 201, a communication bus 202, a memory 203, and at least one network interface 204.

The processor 201 is, for example, a general-purpose central processing unit (central processing unit, CPU), a network processor (network processor, NP), a graphics processing unit (Graphics Processing Unit, GPU), a neural processing unit (neural-network processing unit, NPU), a data processing unit (Data Processing Unit, DPU), a microprocessor, or one or more integrated circuits configured to implement solutions of this application. For example, the processor 201 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The communication bus 202 is configured to transfer information between the foregoing components. The communication bus 202 may be classified into an address bus, a data bus, a control bus, and the like. For ease of representation, only one bold line is used to represent the bus in FIG. 2, but this does not mean that there is only one bus or only one type of bus.

The memory 203 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 203 exists independently, and is connected to the processor 201 through the communication bus 202. The memory 203 may alternatively be integrated with the processor 201.

Optionally, the memory 203 is configured to store an information table mentioned below. When the compute device 200 needs to use the information table, the processor 201 accesses the memory 203 and obtains the information table stored in the memory 203.

The network interface 204 is any apparatus such as a transceiver, and is configured to communicate with another device or a communication network. The network interface 204 includes a wired network interface, and may further include a wireless network interface. The wired network interface may be, for example, an Ethernet interface. The Ethernet interface may be an optical interface, an electrical interface, or a combination thereof. The wireless network interface may be a wireless local area network (wireless local area network, WLAN) interface, a network interface of a cellular network, a combination thereof, or the like.

In specific implementation, in an example, the processor 201 may include one or more CPUs.

In specific implementation, in an example, the compute device 200 may include a plurality of processors. Each of these processors may be a single-core processor (single-CPU) or a multi-core processor (multi-CPU). The processor herein may be one or more devices, circuits, and/or processing cores configured to process data (for example, computer program instructions).

In specific implementation, in an example, the compute device 200 may further include an output device and an input device. The output device communicates with the processor 201, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 201, and receives a user input in a plurality of manners. For example, the input device may be a mouse, a keyboard, a touchscreen device, or a sensor device.

In some embodiments, the memory 203 is configured to store program code 2031 for executing operator searching or operator loading in this application, and the processor 201 executes the program code 2031 stored in the memory 203. In other words, the compute device 200 can implement, by using the processor 201 and the program code 2031 in the memory 203, a method for searching for an operator or a method for loading an operator provided in method embodiments.

The following describes application scenarios of the method for loading the operator and the method for searching for the operator.

In embodiments of this application, the application scenarios include a scenario 1 and a scenario 2. The scenario 1 is a scenario of preloading, that is, operators are loaded when a deep learning model is configured. The scenario 2 is a scenario of lazy loading, that is, a deep learning model is first configured, and an operator is loaded when the operator is executed. The scenario 1 and the scenario 2 include an interaction process among an application, a deep neural network (deep neural network, DNN) acceleration library, and an operator library. The application, the DNN acceleration library, and the operator library are all software programs and are all deployed on a host. The application is a program that performs computation by using a deep learning model. The DNN acceleration library can implement highly optimized common operations such as convolution, pooling, normalization, and activation, and can accelerate computations. The host is connected to one or more external compute units. A plurality of external compute units are of the same type. For example, the plurality of external compute units are all GPUs. Alternatively, a plurality of external compute units are of different types. For example, the plurality of external compute units include a GPU, an NPU, and the like.

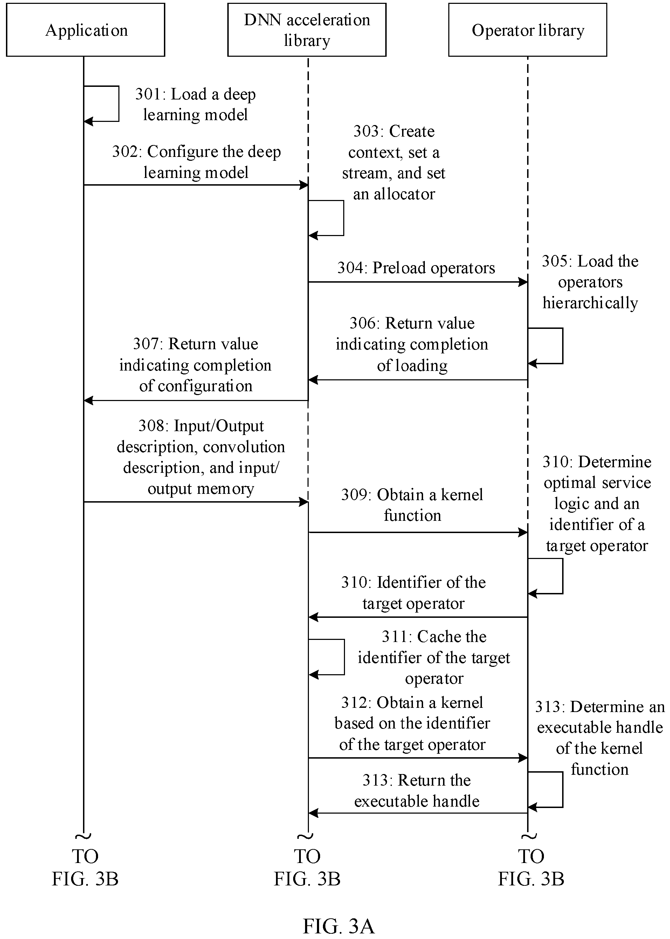

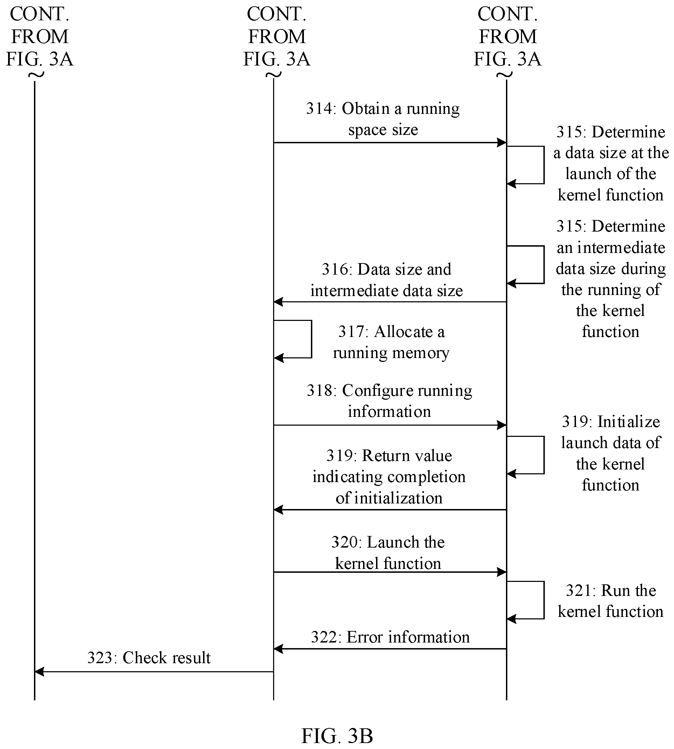

Scenario 1: Preloading of operators. Refer to a procedure of preloading operators and executing an operator shown in FIGS. 3A and 3B.

In an offline inference scenario or a training scenario, a deep learning model is loaded, where the deep learning model is any inference model, such as an image classification model or a speech recognition model, and operators included in the deep learning model start to be loaded.

Step 301: An application loads a file of a deep learning model. The file of the deep learning model is stored in an open neural network exchange (open neural network exchange, ONNX) format.

The application is a program that performs computation by using the deep learning model in the offline inference scenario or the training scenario.

Step 302: The application calls a configuration (Setup) interface, and instructs a DNN acceleration library to configure the deep learning model.

Step 303: The DNN acceleration library creates context (create Context), sets a stream (set Stream), and sets an allocator (set Allocator).

The stream is a task queue of an external compute unit, and tasks are executed in a sequence in the stream, where the task may be a kernel function execution operation of an operator. The set Allocator is used for specifying a memory allocation policy.

Step 304: The DNN acceleration library calls a loading interface, and instructs an operator library to preload operators used in the operator library.

The operator library corresponds to an operator list, and the operator list records information about all operators included in the operator library. The operators used in the operator library include all operators used by the deep learning model, but may be more than all operators used by the deep learning model.

Step 305: The operator library performs hierarchical loading of the operators.

In this embodiment, the operator library loads all host- and device-side service logic into a memory of the host. The host-side service logic mainly includes logic of operator execution preparation and logic of a searching policy for an executable handle of an operator. For example, the operator execution preparation includes tensor shape (shape) inference and data segmentation. Then, the operator library loads the device-side service logic into a memory of each external compute unit. For details about a loading process, refer to the following description. The host-side service logic is service logic that is run on the host and that is of an operator, and the device-side service logic is service logic that is run on the external compute unit and that is of an operator.

It should be noted that, in a scenario of preloading, the device-side service logic is loaded into each external compute unit. This is because a specific external compute unit on which the device-side service logic will run is not known in advance. Therefore, each external compute unit has all device-side service logic. Then, the device-side service logic can be run without reloading.

Step 306: The operator library returns, to the DNN acceleration library, a return value indicating completion of loading.

Step 307: The DNN acceleration library returns, to the application, a return value indicating completion of configuration.

Step 308: The application provides computation-related description information such as an input/output description (input/output desc), a convolution description (conv desc), and an input/output memory (i/o mem) for the DNN acceleration library.

The input/output description includes a format of input/output data, and the input/output memory is a memory occupied by the input/output data.

Step 309: The DNN acceleration library calls an interface for obtaining a kernel function (Get Kernel), and obtains a kernel function of a target operator from the operator library.

The interface for obtaining the kernel function is called to obtain the kernel function of the target operator, and the target operator is any operator of an index. The foregoing description information is carried when the interface for obtaining the kernel function is called.

Step 310: The operator library determines optimal service logic of the target operator in service logic at each layer, determines an identifier of the target operator, and returns the identifier of the target operator to the DNN acceleration library.

In this embodiment, the operator library determines, in service logic at each layer based on the description information, the optimal service logic at each layer for the target operator. A detailed process is described below. The operator library forms the identifier of the target operator from identifiers of the optimal service logic according to a hierarchical sequence.

It should be noted that the operator library executes the service logic at each layer after determining the service logic at each layer that is run on the host. For example, the service logic on the host is divided into three layers: an operation (Operation) layer, a tactic (Tactic) layer, and a kernel layer. The operator library first determines service logic at the operation layer, and then executes the service logic at the operation layer; determines service logic at the tactic layer, and then executes the service logic at the tactic layer; and determines service logic at the kernel layer, and then executes the service logic at the kernel layer.

Step 311: The DNN acceleration library caches the identifier of the target operator.

In step 311, after the DNN acceleration library caches the identifier of the target operator into the memory of the host, when the target operator is subsequently accessed again, the operator may be located through indexing in constant time based on the identifier of the target operator.

Step 312: The DNN acceleration library calls an interface for obtaining a kernel, and requests, from the operator library, to obtain an executable handle of the kernel, where the identifier of the target operator is carried when the interface is called.

Step 313: The operator library determines the executable handle of the kernel based on the identifier of the target operator, and returns the executable handle to the DNN acceleration library.

Step 314: The DNN acceleration library calls an interface for obtaining a running space size (get workspace size), and obtains the running space size from the operator library.

Step 315: The operator library determines a data size at the launch of the kernel function (kernel. Get Launch Data Size), and determines an intermediate data size during the running of the kernel function (kernel. Get Scratch Size).

Step 316: The operator library returns, to the DNN acceleration library, the data size at the launch of the kernel function and the intermediate data size during the running of the kernel function.

Step 317: The DNN acceleration library allocates a running memory (Allocate Workspace Mem) based on the data size at the launch of the kernel function and the intermediate data size during the running of the kernel function.

Step 318: The DNN acceleration library calls an interface for configuring running information (Setup Run Info), and configures the running information for the operator library.

Step 319: The operator library initializes launch data of the kernel function (kernel. Initial Launch Data), and returns, to the DNN acceleration library, a return value indicating completion of initialization.

Step 320: The DNN acceleration library calls an interface for launching the kernel function (Launch Kernel), and instructs the operator library to launch the kernel function (Launch Kernel).

Step 321: The operator library runs the kernel function (Kernel.Run).

The operator library instructs the external compute unit to run the kernel function. For example, the operator library determines a load of each external compute unit, and uses an external compute unit with a minimum load to run the kernel function.

Step 322: If an error occurs during the running of the kernel function, the operator library returns error (Error Handling) information to the DNN acceleration library. When the running of the kernel function is completed correctly, the operator library returns a computation result to the DNN acceleration library.

Step 323: The DNN acceleration library returns a check result (Check Result) to the application.

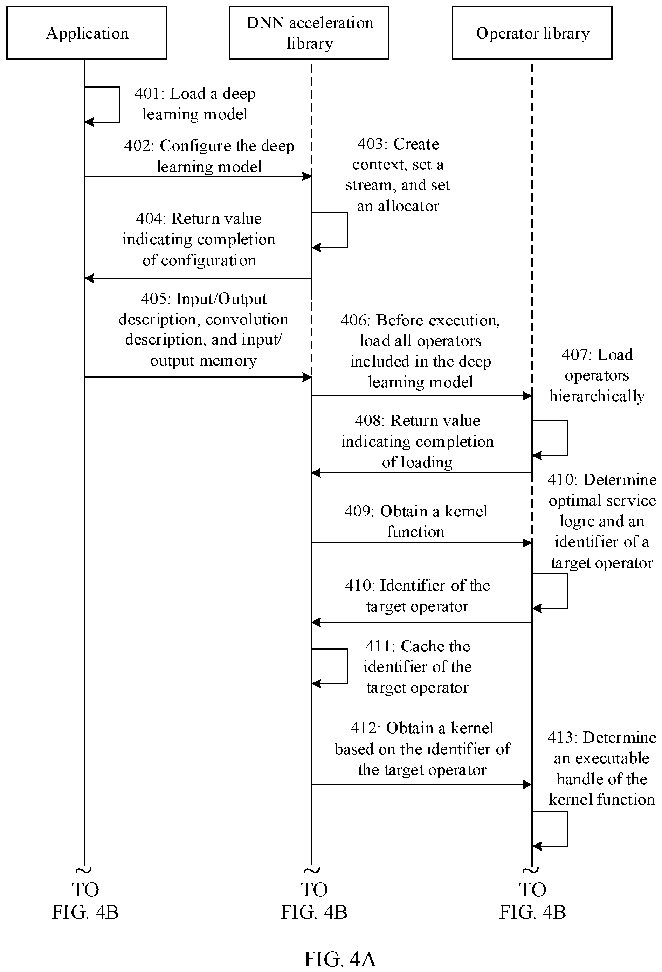

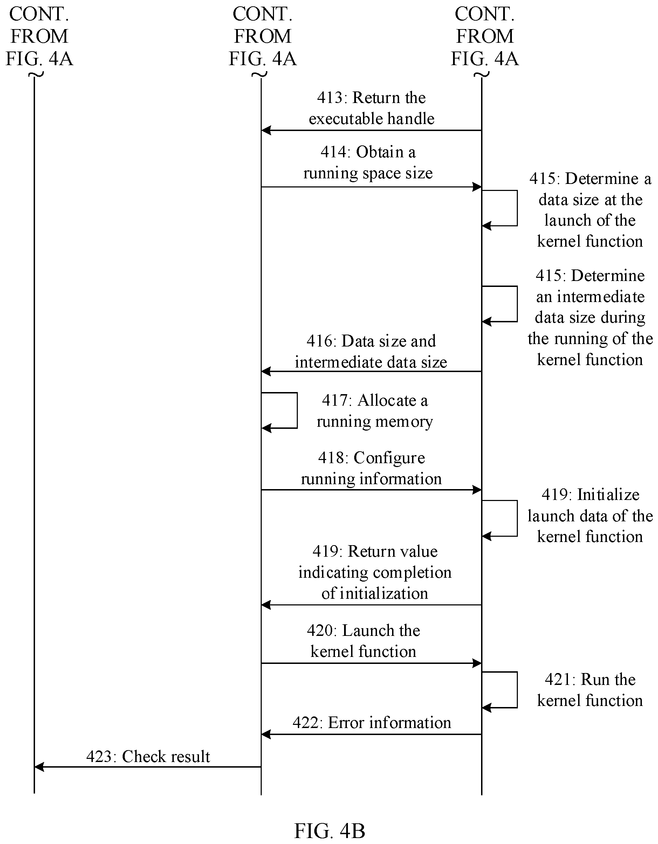

Scenario 2: Lazy loading of an operator. Refer to a procedure of lazy-loading an operator and executing the operator shown in FIGS. 4A and 4B.

Step 401: An application loads a file of a deep learning model. The file of the deep learning model is stored in an ONNX format.

Step 402: The application calls a Setup interface, and instructs a DNN acceleration library to configure the deep learning model.

Step 403: The DNN acceleration library create Context, set Stream, and set Allocator.

Step 404: The DNN acceleration library returns, to the application, a return value indicating completion of configuration.

Step 405: The application provides computation-related description information such as input/output desc, conv desc, and i/o mem for the DNN acceleration library.

Step 406: The DNN acceleration library instructs, based on the description information provided by the application, an operator library to load required operators.

The required operators are all operators included in the deep learning model.

Step 407: The operator library performs hierarchical loading of the operators.

In this embodiment, the operator library loads service logic of all the host- and device-side operators into a memory of the host, and then loads, based on an external compute unit on which device-side service logic is run, the device-side service logic into the external compute unit. For details about a loading process, refer to the following description.

Step 408: The operator library returns, to the DNN acceleration library, a return value indicating completion of loading.

Step 409: The DNN acceleration library calls an interface for obtaining a kernel function Get Kernel, and obtains a kernel function of a target operator from the operator library.

The interface for obtaining the kernel function is called to obtain the kernel function of the target operator, and the target operator is any operator of an index. The foregoing description information is carried when the interface for obtaining the kernel function is called.

Step 410: The operator library determines optimal service logic of the target operator in service logic at each layer, determines an identifier of the target operator, and returns the identifier of the target operator to the DNN acceleration library.

In this embodiment, the operator library determines, in service logic at each layer based on the description information, the optimal service logic at each layer for the target operator. A detailed process is described below. The operator library forms the identifier of the target operator from identifiers of the optimal service logic according to a hierarchical sequence.

Step 411: The DNN acceleration library caches the identifier of the target operator.

Step 412: The DNN acceleration library calls an interface for obtaining a kernel, and requests, from the operator library, to obtain an executable handle of the kernel, where the identifier of the target operator is carried when the interface is called.

Step 413: The operator library determines the executable handle of the kernel based on the identifier of the target operator, and returns the executable handle to the DNN acceleration library.

Step 414: The DNN acceleration library calls a get workspace size interface, and obtains a running space size from the operator library.

Step 415: The operator library determines kernel. Get Launch Data Size, and determines kernel. Get Scratch Size.

Step 416: The operator library returns, to the DNN acceleration library, the data size at the launch of the kernel function and the intermediate data size during the running of the kernel function.

Step 417: The DNN acceleration library allocates a running memory based on the data size at the launch of the kernel function and the intermediate data size during the running of the kernel function.

Step 418: The DNN acceleration library calls a Setup Run Info interface, and configures running information for the operator library.

Step 419: The operator library initializes launch data of the kernel function, and returns, to the DNN acceleration library, a return value indicating completion of initialization.

Step 420: The DNN acceleration library calls an interface for launching the kernel function, and instructs the operator library to launch the kernel function.

Step 421: The operator library runs the kernel function.

Step 422: If an error occurs during the running of the kernel function, the operator library returns error information to the DNN acceleration library. When the running of the kernel function is completed correctly, the operator library returns a computation result to the DNN acceleration library.

Step 423: The DNN acceleration library returns a return value indicating a check result to the application.

The difference between the procedure shown in FIGS. 3A and 3B and the procedure shown in FIGS. 4A and 4B lies in: In FIGS. 3A and 3B, all operators are preloaded. In FIGS. 4A and 4B, before execution, an external compute unit of an operator to be executed is determined, and then host- and device-side service logic that is of the operator to be executed is loaded into a corresponding memory of the external compute unit.

In addition, in the procedure in FIGS. 4A and 4B, in a case that the host is connected to a plurality of external compute units, a specific external compute unit on which the operator is finally run cannot be determined when the deep learning model is configured, but the external compute unit on which the operator is run has been determined during execution, so that the device-side service logic of the operator can be directly loaded into a memory of that external compute unit. Moreover, service logic can also be loaded based on required operators, avoiding excessive time for loading all operators for the first time.

The following separately describes a hierarchical loading process, an information table generation process, a process of determining an identifier of a target operator and calling the target operator for the first time, and a process of searching for an operator.

### 1. Hierarchical loading process.

When developing an operator, a programmer divides, based on different attributes, service logic that is run on a host and that is of the operator, to obtain n layers of service logic. The attributes include but are not limited to one or more of a quantity of input/output tensors, a tensor shape (shape), a data type of a tensor, or a data arrangement format of a tensor. In the n layers, service logic at each layer, except a highest layer (first layer), is subordinate to service logic at its upper layer. Service logic at a lowest layer is bound to an executable handle in a one-to-one manner. To be specific, one piece of service logic at the lowest layer corresponds to an executable handle of one operator on the device side, and different pieces of service logic at the lowest layer correspond to executable handles of different operators on the device side. Operators under same service logic at an i^{th} layer have one or more identical attributes. For example, operators under same service logic at the i^{th} layer have a same quantity of input/output tensors. In another example, input tensors of operators under same service logic at the i^{th} layer are all of floating-point number type. Operators under different service logic at the i^{th} layer are different in at least one of the foregoing one or more attributes. For example, input tensors of operators under two pieces of service logic at the i^{th} layer are of floating-point number and integer types.

A to-be-loaded operator is an operator used by a deep learning model in an operator library. The host loads, into a memory of the host, service logic that is run on the host and that is of the to-be-loaded operator. The host allocates consecutive identifiers to all service logic at a first layer, records a subordinate relationship between service logic at each layer and service logic at an upper layer to which the service logic is subordinate, and allocates consecutive identifiers to all service logic that is subordinate to same service logic at an upper layer during establishment of the subordinate relationship. For example, the first layer includes three pieces of service logic, and identifiers of the three pieces of service logic are 0, 1, and 2. At a second layer, three pieces of service logic are subordinate to the service logic with the identifier 0, and identifiers of these three pieces of service logic are 0, 1, and 2. At the second layer, four pieces of service logic are subordinate to the service logic with the identifier 1, and identifiers of these four pieces of service logic are 0, 1, 2, and 3.

In addition, the host loads device-side service logic of the to-be-loaded operator into the memory of the host, and then the service logic is further loaded into a memory of an external compute unit. During loading, service logic at a lowest layer (an n^{th} layer) is bound to an executable handle. In this way, when the service logic at the lowest layer on the host side is found subsequently, the executable handle bound to the service logic can be accessed, so that the operator can be executed.

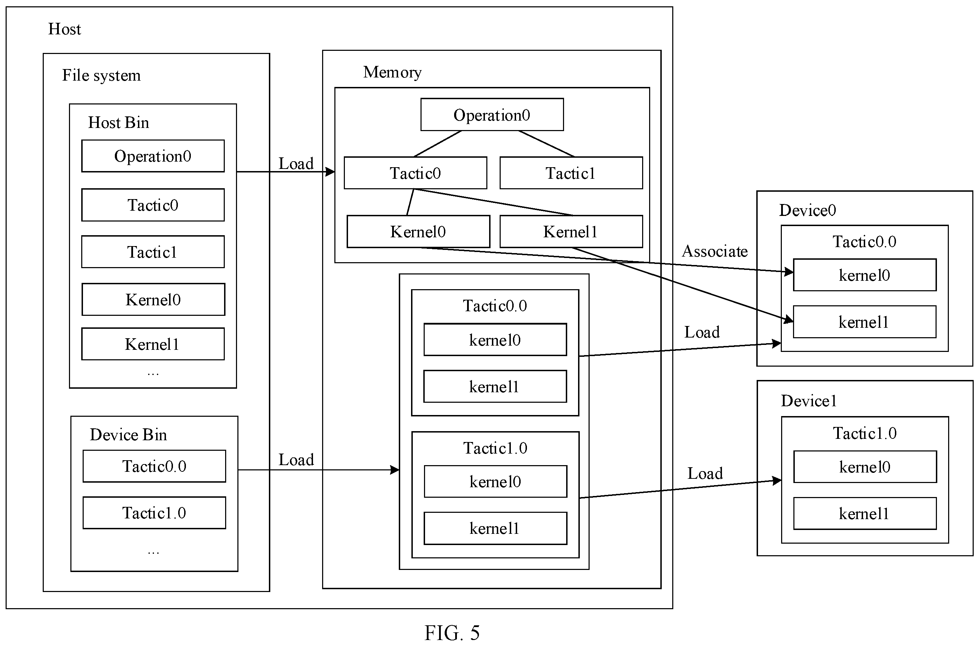

For example, as shown in FIG. 5, host-side service logic of a to-be-loaded operator is compiled and encapsulated in a host binary (Host Bin) file, and device-side service logic of the to-be-loaded operator is compiled and encapsulated in a Device Bin file, where both the Host Bin file and the Device Bin file belong to a host file system. The host-side service logic of the to-be-loaded operator is divided into three layers: an operation layer, a tactic layer, and a kernel layer, from top to bottom. The operation layer shows one operation. The tactic layer shows two tactics subordinate to the operation. Two kernels at the kernel layer are subordinate to one tactic, and service logic at the kernel layer that is subordinate to the other tactic is not shown. During identifier allocation, an identifier allocated to the operation is 0, identifiers allocated to the two Tactics are 0 and 1, and identifiers allocated to the two kernels are 0 and 1.

The Device Bin file includes Tactic0.0, Tactic1.0, and the like. Tactic0.0 is loaded into an external compute unit Device0, and Tactic1.0 is loaded into an external compute unit Device1. Tactic0.0 includes a kernel0 function and a kernel1 function. Tactic1.0 includes a kernel0 function and a kernel1 function. In Tactic0.0, the kernel0 function on the device side is associated with kernel0 on the host side. In Tactic0.0, the kernel1 function on the device side is associated with kernel1 on the host side.

Optionally, when the to-be-loaded operator is loaded, all host-side service logic in the Host Bin file is loaded into the memory of the host at a time, all device-side service logic in the Device Bin file is loaded into the memory of the host at a time, and then all the device-side service logic is further loaded into the memory of the external compute unit.

In addition, based on a hierarchical loading mechanism, when different operators in the to-be-loaded operator have same service logic, the service logic is loaded only once, so that storage space of the memory can be saved.

### 2. Information table generation process.

In a process of loading a to-be-loaded operator, an information table at each layer is generated. A quantity of information tables is equal to a quantity of layers. For example, if there are n layers, the quantity of information tables is also n.

First, an information table of service logic at a highest layer is generated, and the information table includes information about all service logic at the highest layer. An index of information about each piece of service logic is an identifier of the service logic. After the information table of the service logic at the highest layer is generated, the information table is stored in a form of a sequential list. To be specific, in a memory of the host, a segment of storage units with consecutive physical addresses are used to sequentially store the information about all the service logic at the highest layer.

Next, an information table of service logic at a second layer is generated, the information table includes a plurality of information sub-tables, each information sub-table corresponds to one or more pieces of service logic, the service logic corresponding to each information sub-table is subordinate to one piece of service logic at a first layer, service logic corresponding to different information sub-tables is subordinate to different service logic at the first layer, and each information sub-table includes information about all corresponding service logic. An index of information about each piece of service logic is an identifier of the service logic.

Then, an information table of service logic at a third layer is generated, the information table includes a plurality of information sub-tables, each information sub-table corresponds to one or more pieces of service logic, the service logic corresponding to each information sub-table is subordinate to one piece of service logic at the second layer, service logic corresponding to different information sub-tables is subordinate to different service logic at the second layer, and each information sub-table includes information about all corresponding service logic. An index of information about each piece of service logic is an identifier of the service logic.

Similarly, information tables of service logic at all other layers are generated layer by layer. Each information sub-table included in the information table is stored in the memory of the host in a form of a sequential list.

Assuming that there are n layers, for each piece of service logic from a first layer to an (n-1)^{th} layer, information about the service logic includes a name of the service logic, storage address information in a memory of the host, and address information of an information sub-table. The information sub-table includes information about service logic at a lower layer that is subordinate to the service logic. The address information includes a base address of the information sub-table in the memory of the host. For service logic at an n^{th} layer, information about the service logic includes a name of the service logic, storage address information in the memory of the host, and information about a kernel function. After the service logic is obtained based on the storage address information, an executable handle bound to the service logic may be obtained based on the service logic. For example, the service logic includes the executable handle.

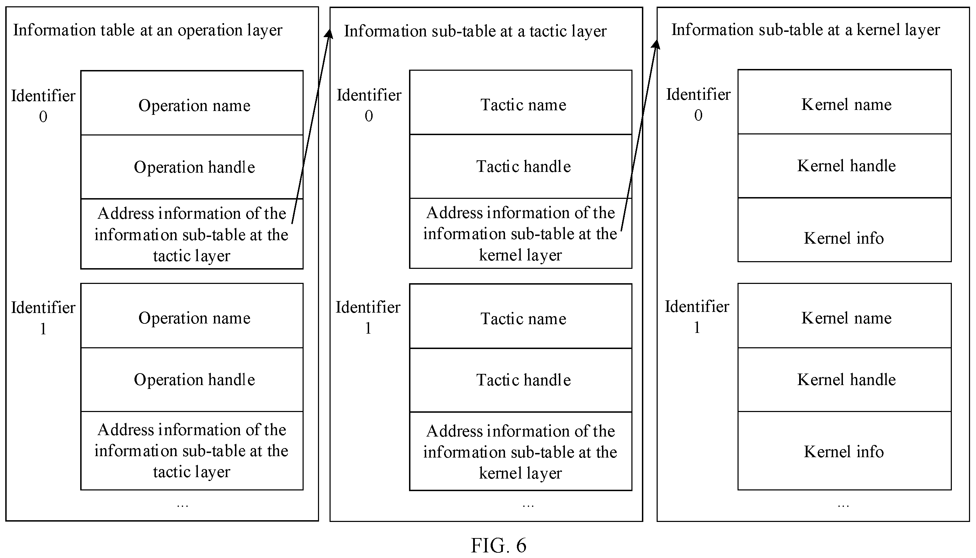

FIG. 6 shows an information table of service logic of the to-be-loaded operator shown in FIG. 5. An information table at an operation layer includes information about all service logic at the operation layer, and information about each piece of service logic includes an operation name, an operation pointer (handle), and address information of an information sub-table at a tactic layer. The information sub-table at the tactic layer includes information about all service logic subordinate to the operation with an identifier 0, and information about each piece of service logic includes a tactic name, a tactic handle, and address information of an information sub-table at a kernel layer. The information sub-table at the kernel layer includes information about all service logic subordinate to the tactic with an identifier 0, and information about each piece of service logic includes a kernel name, a kernel handle, and kernel information. The operation name, tactic name, and kernel name indicate the names of the service logic at all layers. The operation handle, tactic handle, and kernel handle indicate the storage address information of the service logic at all layers. The kernel information includes space, parameters, and other relevant information that are required for running a kernel function.

It should be noted that, it can be learned from the foregoing description that an identifier of a target operator is divided into data domains of a plurality of lengths based on a quantity of layers. A quantity of data domains is the same as the quantity of layers. The lengths of the data domains corresponding to all the layers may be set according to an actual requirement, and may be the same or may be different. A value of each data domain is an identifier of the operator, not the service logic, at that layer. According to this policy, each operator has a unique identifier.

In addition, a reserved (reserved) field may be further set in the identifier of the target operator, and the reserved field may be set at an end of the identifier of the target operator.

### 3. Process of determining an identifier of a target operator and calling the target operator for the first time.

A user who constructs a deep learning model configures a specified parameter of each operator based on an operator list in an operator library. The specified parameter includes an identifier of service logic of the operator at a first layer. When a target operator is called, a specified parameter and parameter information of the target operator are obtained. The parameter information includes one or more of a specific parameter used by the target operator, a data arrangement format of an input tensor, a shape of an input tensor, or a data type of an input tensor. The specific parameter is a unique parameter of the target operator.

When the target operator is called, an index of service logic that is of the target operator and that is at the first layer is obtained from the specified parameter of the target operator, information about the service logic that is of the target operator and that is at the first layer is determined from an information table at the first layer based on the index, address information of the service logic that is of the target operator and that is at the first layer is obtained from the information, and first service logic that is of the target operator and that is at the first layer is read from a memory based on the address information. In addition, address information of an information sub-table at a second layer is obtained from the information, where the information sub-table is an information sub-table of service logic subordinate to the first service logic, and the service logic at the second layer that is subordinate to the first service logic is determined based on the address information.

Then, the parameter information of the target operator is obtained. The host subsequently determines, layer by layer based on the parameter information, optimal service logic of the target operator from service logic at all layers. Identifiers of the optimal service logic that is of the target operator and that is determined layer by layer are combined in a sequence from a highest layer to a lowest layer, to obtain an identifier of the target operator. In other words, in the identifier of the target operator, the identifiers corresponding to the first layer to an n^{th} layer are arranged from front to back.

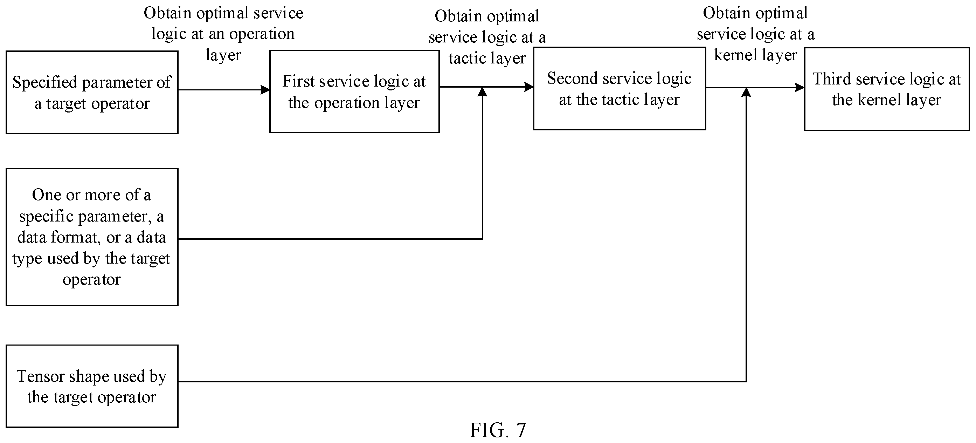

For example, as shown in FIG. 7, n layers include three layers, and the three layers include an operation layer, a tactic layer, and a kernel layer. First service logic at the operation layer for a target operator is determined at the operation layer based on a specified parameter of the target operator. Service logic at the tactic layer that is subordinate to the first service logic is determined. Second service logic that meets one or more of the specific parameter, a data format, or a data type is determined from service logic at the tactic layer. The second service logic is optimal service logic at the tactic layer for the target operator. Then, service logic at the kernel layer that is subordinate to the second service logic is determined. Third service logic that meets a tensor shape is determined from service logic at the kernel layer. The third service logic is optimal service logic at the kernel layer for the target operator. An identifier of the target operator includes an identifier of the first service logic, an identifier of the second service logic, and an identifier of the third service logic. The identifier of the first service logic, the identifier of the second service logic, and the identifier of the third service logic are arranged from front to back.

In addition, after optimal service logic at a lowest layer is determined for the target operator, an executable handle bound to the optimal service logic is determined. Then, by using the executable handle, a launch process is started and the target operator is executed.

The foregoing process is a process of calling the target operator for the first time. In the process of calling the target operator for the first time, after the identifier of the target operator is determined, the identifier of the target operator is cached. Subsequently, the identifier of the target operator may be directly used to search for the target operator.

### 4. Process of searching for an operator.

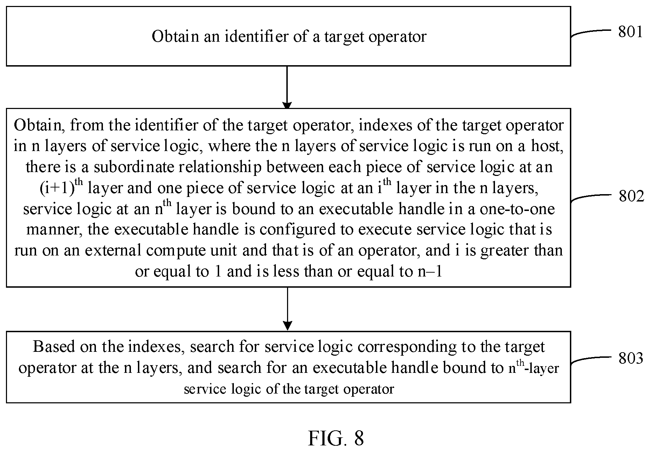

After an identifier of a target operator is determined, the identifier of the target operator is cached. When the target operator needs to be used again, the cached identifier of the target operator is obtained. For a procedure of searching for an operator, refer to step 801 to step 803 shown in FIG. 8.

Step 801: Obtain an identifier of a target operator.

In this embodiment, the host obtains the cached identifier of the target operator.

Step 802: Obtain, from the identifier of the target operator, indexes of the target operator in n layers of service logic, where the n layers of service logic is run on the host, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on an external compute unit and that is of an operator, and i is greater than or equal to 1 and is less than or equal to n-1.

In this embodiment, the host splits the identifier of the target operator based on lengths of data domains corresponding to the n layers, yielding n identifiers. These n identifiers correspond to indexes of the target operator in the n layers of service logic. For example, if the n layers include three layers and the data domain length for each layer is 1 bit, continuous 1-bit data is extracted from a starting position of the identifier of the target operator, and each 1-bit data is an index of the target operator in one of the n layers of service logic.

Step 803: Based on the indexes, search for service logic corresponding to the target operator across the n layers, and search for an executable handle bound to n^{th}-layer service logic of the target operator.

In this embodiment, based on the determined indexes, the host determines, layer by layer in the n layers of service logic, indexes of the target operator across the n layers, and obtains the executable handle bound to the n^{th}-layer service logic of the target operator.

In an optional manner, the executable handle is determined by using an information table. A processing procedure is as follows.

Information about first service logic at a first layer for a target operator is determined in an information table at the first layer by using an index at the first layer, and storage address information of the first service logic in a memory of a host and address information of an information sub-table corresponding to service logic at a second layer for the target operator are found in the information. The host finds the first service logic in the host memory based on the storage address information, finds the information sub-table based on the address information of the information sub-table, finds information about second service logic at the second layer for the target operator in the information sub-table by using an index at the second layer, and finds, in the information, storage address information of the second service logic in the host memory and address information of an information sub-table corresponding to third service logic at a third layer for the target operator, and so on, until information of n^{th}-layer service logic of the target operator is found. Storage address information of the n^{th} service logic in the host memory is found from the information of the n^{th} service logic, the n^{th} service logic is found in the host memory based on the storage address information, and then an executable handle bound to the n^{th} service logic is obtained.

In this way, the host runs service logic at the first layer to the n^{th} layer for the target operator, and the external compute unit finds a kernel function by using the executable handle and executes the kernel function, implementing execution of the target operator.

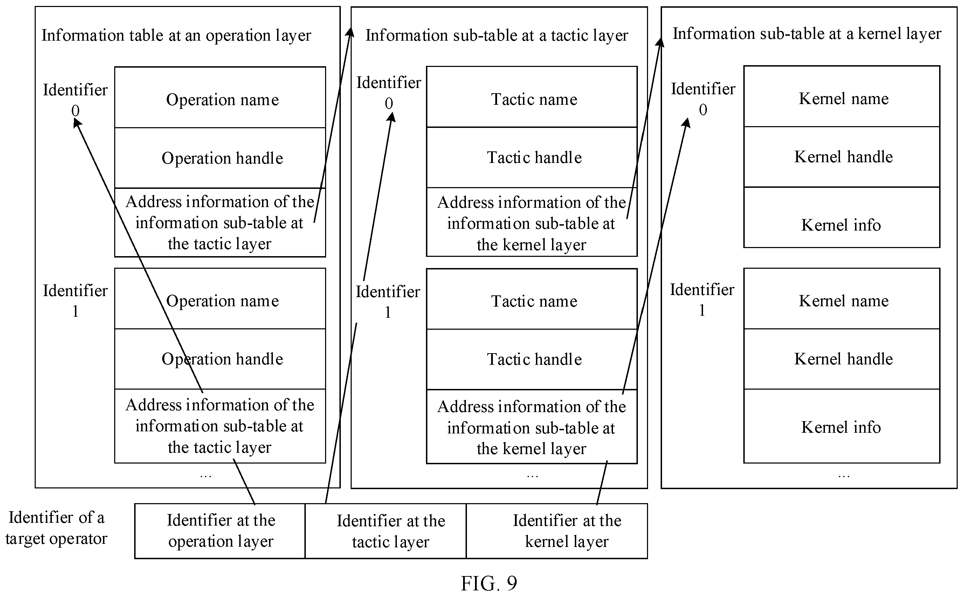

For example, as shown in FIG. 9, where the information table shown in FIG. 6 is used as an example for description, an identifier of a target operator is 000, and indexes at an operation layer, a tactic layer, and a kernel layer are 0, 0, and 0 respectively. Information about service logic with the identifier 0 is obtained from the operation layer; from the obtained information, which records address information of an information sub-table at the tactic layer, information about service logic with the identifier 0 is obtained from the information sub-table at the tactic layer; from the newly obtained information, which records address information of an information sub-table at the kernel layer, information about service logic with the identifier 0 is obtained from the information sub-table at the kernel layer.

The method for searching for an operator in embodiments of this application requires no hash calculation or hash collision resolution, enabling the implementation of quick searching for an operator, thereby reducing overall time for operator access and execution. In addition, from an information table at a first layer, an address of an information table at a lower layer is quickly obtained based on an index, and an executable handle of a kernel function on an external compute unit side may be accessed in constant time. In this way, when an operator is frequently called in an inference or training scenario, overall computational efficiency can be improved, and performance stability can be improved.

In addition, during hierarchical loading of an operator, identifiers of the operator at all layers are synchronously allocated, so that quick loading and subsequent indexing of the operator can be implemented.

Moreover, this application is applied to an underlying operator-level software stack on a heterogeneous development platform. An interface for calling an operator may be obtained from a call interface header file in a software development kit (software development kit, sdk) provided by a chip. Infringement evidence may be collected based on an operator calling manner described in the sdk call interface header file.

The following describes apparatuses provided in embodiments of this application.

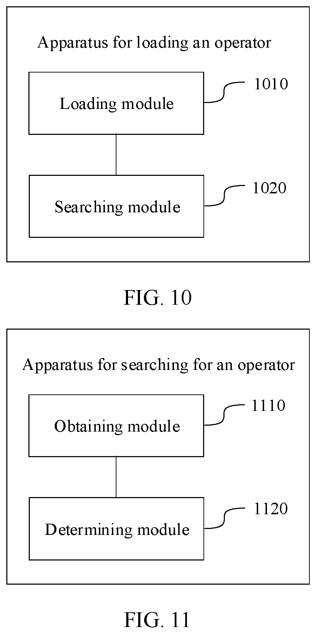

FIG. 10 is a diagram of a structure of an apparatus for loading an operator according to an embodiment of this application. The apparatus is used in a host, and the host is externally connected to a compute unit. The apparatus may be implemented as part of or all of the apparatus by software, hardware, or a combination thereof. The apparatus provided in this embodiment of this application can implement the procedure shown in FIG. 5 in embodiments of this application. The apparatus includes a loading module 1010 and a searching module 1020.

The loading module 1010 is configured to:
load first service logic into a memory of the host, where the first service logic is service logic that is run on the host and that is of a to-be-loaded operator of a deep learning model, the first service logic is divided into n layers of service logic based on attributes, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on an external compute unit and that is of the to-be-loaded operator, and i is greater than or equal to 1 and is less than or equal to n-1, and where the loading module 1010 may be specifically configured to implement the foregoing process of loading the service logic run on the host; and
load second service logic into the memory of the host, and load the second service logic from the memory of the host to a memory of the external compute unit, where the second service logic is service logic that is run on the external compute unit and that is of the to-be-loaded operator, and where the loading module 1010 may be specifically configured to implement the foregoing process of loading the service logic run on the external compute unit.

In an optional manner, the loading module 1010 is further configured to:
allocate consecutive identifiers to all pieces of service logic at a first layer in the n layers; and
allocate consecutive identifiers to pieces of service logic at the (i+1)^{th} layer that are subordinate to any one piece of service logic at the i^{th} layer.

In an optional manner, the searching module 1020 is configured to:
obtain an identifier of a target operator among to-be-loaded operators;
obtain, from the identifier of the target operator, indexes of the target operator in the n layers of service logic; and
based on the indexes, search for service logic corresponding to the target operator across the n layers, and search for an executable handle bound to n^{th}-layer service logic of the target operator.

In an optional manner, the searching module 1020 is configured to obtain the cached identifier of the target operator.

In an optional manner, the searching module 1020 is further configured to: before the cached identifier of the target operator is obtained, determine, layer by layer, optimal service logic of the target operator in the n layers of service logic based on parameter information of the target operator, where the parameter information includes one or more of a specific parameter, a data format, or a data type used by the target operator, and a tensor shape, and identifiers of the optimal service logic of the target operator form the identifier of the target operator according to a hierarchical sequence of the n layers; and cache the identifier of the target operator.

In an optional manner, the searching module 1020 is configured to:
obtain n information tables corresponding to the n layers of service logic, where an information table corresponding to service logic at the i^{th} layer includes information about each piece of service logic at the i^{th} layer, for each piece of service logic at the i^{th} layer, the information about the service logic includes storage address information of the service logic and address information of an information sub-table, and the information sub-table includes information about service logic at the (i+1)^{th} layer that is subordinate to the service logic; and an information table at the n^{th} layer includes information about each piece of service logic at the n^{th} layer, and for each piece of service logic at the n^{th} layer, the information about the service logic includes storage address information of the service logic and an executable handle bound to the service logic; and
based on the n information tables and the indexes, search for the service logic corresponding to the target operator across the n layers, and search for the executable handle bound to the n^{th}-layer service logic of the target operator.

FIG. 11 is a diagram of a structure of an apparatus for searching for an operator according to an embodiment of this application. The apparatus is used in a host, and the host is externally connected to a compute unit. The apparatus may be implemented as part of or all of the apparatus by software, hardware, or a combination thereof. The apparatus provided in this embodiment of this application can implement the procedure shown in FIG. 8 in embodiments of this application. The apparatus includes an obtaining module 1110 and a determining module 1120.

The obtaining module 1110 is configured to: obtain an identifier of a target operator; and
obtain, from the identifier of the target operator, indexes of the target operator in n layers of service logic, where the n layers of service logic is run on the host, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of an operator, and i is greater than or equal to 1 and is less than or equal to n-1, and where the obtaining module 1110 may be specifically configured to implement obtaining functions in step 801 and step 802 and perform implicit steps included in step 801 and step 802.

The determining module 1120 is configured to: based on the indexes, search for service logic corresponding to the target operator across the n layers, and search for an executable handle bound to n^{th}-layer service logic of the target operator, where the determining module 1120 may be specifically configured to implement a determining function in step 803 and perform an implicit step included in step 803.

In an optional manner, the obtaining module 1110 is configured to:
obtain the cached identifier of the target operator.

In an optional manner, the obtaining module 1110 is further configured to:
before the cached identifier of the target operator is obtained, determine, layer by layer, optimal service logic of the target operator in the n layers of service logic based on parameter information of the target operator, where the parameter information includes one or more of a specific parameter, a data format, or a data type used by the target operator, and a tensor shape, and identifiers of the optimal service logic of the target operator form the identifier of the target operator according to a hierarchical sequence of the n layers; and cache the identifier of the target operator.

In an optional manner, the determining module 1120 is configured to:
obtain n information tables corresponding to the n layers of service logic, where an information table corresponding to service logic at the i^{th} layer includes information about each piece of service logic at the i^{th} layer, for each piece of service logic at the i^{th} layer, the information about the service logic includes storage address information of the service logic and address information of an information sub-table, and the information sub-table includes information about service logic at the (i+1)^{th} layer that is subordinate to the service logic; and an information table at the n^{th} layer includes information about each piece of service logic at the n^{th} layer, and for each piece of service logic at the n^{th} layer, the information about the service logic includes storage address information of the service logic and an executable handle bound to the service logic; and
based on the n information tables and the indexes, search for the service logic corresponding to the target operator across the n layers, and search for the executable handle bound to the n^{th}-layer service logic of the target operator.

In an optional manner, the apparatus further includes:
a loading module, configured to: load, into a memory of the host, service logic that is run on the host and that is of a to-be-loaded operator of a deep learning model, where the n layers of service logic is obtained by dividing, based on attributes, the service logic that is run on the host and that is of the to-be-loaded operator, and the target operator pertains to the to-be-loaded operator; load, into the memory of the host, service logic that is run on the external compute unit and that is of the to-be-loaded operator, and load, from the memory of the host to the external compute unit, the service logic that is run on the external compute unit and that is of the to-be-loaded operator; allocate consecutive identifiers to all pieces of service logic at a first layer in the n layers; and allocate consecutive identifiers to pieces of service logic at the (i+1)^{th} layer that are subordinate to any one piece of service logic at the i^{th} layer.

In an optional manner, the loading module is configured to: when the deep learning model is configured or the deep learning model is run, load, into the memory of the host, service logic that is run on the host and that is of all operators included in the deep learning model.

For a detailed operator loading process performed by the apparatus for loading the operator shown in FIG. 10 and a detailed operator searching process performed by the apparatus for searching for the operator shown in FIG. 11, refer to descriptions in the foregoing embodiments. Details are not described herein again. The apparatus for loading the operator shown in FIG. 10 and the apparatus for searching for the operator shown in FIG. 11 are the compute device 200 in FIG. 2.

In some embodiments, an embodiment of this application provides a computer program product. The computer program product includes computer instructions, and the computer instructions are stored in a computer-readable storage medium. A processor of a compute device reads the computer instructions from the computer-readable storage medium, and the processor executes the computer instructions, so that the compute device performs the procedures shown in FIGS. 3A and 3B, FIGS. 4A and 4B, and FIG. 8.

A person of ordinary skill in the art may be aware that the method steps and units described in embodiments disclosed in this application can be implemented by electronic hardware, computer software, or a combination thereof. To clearly describe interchangeability between hardware and software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

In several embodiments provided in this application, it should be understood that the disclosed system architecture, apparatus, and method may be implemented in other manners. For example, the described apparatus embodiments are merely examples. For example, division into the modules is merely logical function division and there may be other division during actual implementation. For example, a plurality of modules or components may be combined or integrated into another system, or some features may be omitted or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located at one position, or may be distributed on a plurality of network modules. Some or all of the modules may be selected based on actual requirements to achieve the objectives of the solutions of embodiments of this application.

In addition, modules in embodiments of this application may be integrated into one processing module, or each of the modules may exist alone physically, or two or more modules may be integrated into one module. The integrated module may be implemented in a form of hardware, or may be implemented in a form of a software module.

If the integrated module is implemented in a form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method in embodiments of this application. The foregoing storage medium includes any medium that can store program code, such as a USB flash drive, a removable hard disk, a ROM, a RAM, a magnetic disk, or an optical disc.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for loading an operator, wherein the method is applied to a host, the host is connected to an external compute unit, and the method comprises:
loading first service logic into a memory of the host, wherein the first service logic is service logic that is run on the host and that is of a to-be-loaded operator of a deep learning model, the first service logic is divided into n layers of service logic based on attributes, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of the to-be-loaded operator, and i is greater than or equal to 1 and is less than or equal to n-1; and
loading second service logic into the memory of the host, and loading the second service logic from the memory of the host to a memory of the external compute unit, wherein the second service logic is service logic that is run on the external compute unit and that is of the to-be-loaded operator.

2. The method according to claim 1, wherein the method further comprises:
allocating consecutive identifiers to all pieces of service logic at a first layer in the n layers; and
allocating consecutive identifiers to pieces of service logic at the (i+1)^{th} layer that are subordinate to any one piece of service logic at the i^{th} layer.

3. The method according to claim 1 or 2, wherein the method further comprises:
obtaining an identifier of a target operator among to-be-loaded operators;
obtaining, from the identifier of the target operator, indexes of the target operator in the n layers of service logic; and
based on the indexes, searching for service logic corresponding to the target operator across the n layers, and searching for an executable handle bound to n^{th}-layer service logic of the target operator.

4. The method according to claim 3, wherein obtaining the identifier of the target operator among the to-be-loaded operators comprises:
obtaining the cached identifier of the target operator.

5. The method according to claim 4, wherein before obtaining the cached identifier of the target operator, the method further comprises:
determining, layer by layer, optimal service logic of the target operator in the n layers of service logic based on parameter information of the target operator, wherein the parameter information comprises one or more of a specific parameter, a data format, or a data type used by the target operator, and a tensor shape, and identifiers of the optimal service logic of the target operator form the identifier of the target operator according to a hierarchical sequence of the n layers; and
caching the identifier of the target operator.

6. The method according to any one of claims 3 to 5, wherein based on the indexes, searching for the service logic corresponding to the target operator across the n layers, and searching for the executable handle bound to the n^{th}-layer service logic of the target operator comprises:
obtaining n information tables corresponding to the n layers of service logic, wherein an information table corresponding to service logic at the i^{th} layer comprises information about each piece of service logic at the i^{th} layer, for each piece of service logic at the i^{th} layer, the information about the service logic comprises storage address information of the service logic and address information of an information sub-table, and the information sub-table comprises information about service logic at the (i+1)^{th} layer that is subordinate to the service logic; and an information table at the n^{th} layer comprises information about each piece of service logic at the n^{th} layer, and for each piece of service logic at the n^{th} layer, the information about the service logic comprises storage address information of the service logic and an executable handle bound to the service logic; and
based on the n information tables and the indexes, searching for the service logic corresponding to the target operator across the n layers, and searching for the executable handle bound to the n^{th}-layer service logic of the target operator.

7. An apparatus for loading an operator, wherein the apparatus is used in a host, the host is connected to an external compute unit, and the apparatus comprises:
a loading module, configured to:
load first service logic into a memory of the host, wherein the first service logic is service logic that is run on the host and that is of a to-be-loaded operator of a deep learning model, the first service logic is divided into n layers of service logic based on attributes, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of the to-be-loaded operator, and i is greater than or equal to 1 and is less than or equal to n-1; and
load second service logic into the memory of the host, and load the second service logic from the memory of the host to a memory of the external compute unit, wherein the second service logic is service logic that is run on the external compute unit and that is of the to-be-loaded operator.

8. The apparatus according to claim 7, wherein the loading module is further configured to:
allocate consecutive identifiers to all pieces of service logic at a first layer in the n layers; and
allocate consecutive identifiers to pieces of service logic at the (i+1)^{th} layer that are subordinate to any one piece of service logic at the i^{th} layer.

9. The apparatus according to claim 7 or 8, wherein the apparatus further comprises a searching module, configured to:
obtain an identifier of a target operator among to-be-loaded operators;
obtain, from the identifier of the target operator, indexes of the target operator in the n layers of service logic; and
based on the indexes, search for service logic corresponding to the target operator across the n layers, and search for an executable handle bound to n^{th}-layer service logic of the target operator.

10. The apparatus according to claim 9, wherein the searching module is configured to obtain the cached identifier of the target operator.

11. The apparatus according to claim 10, wherein the searching module is further configured to: before the cached identifier of the target operator is obtained, determine, layer by layer, optimal service logic of the target operator in the n layers of service logic based on parameter information of the target operator, wherein the parameter information comprises one or more of a specific parameter, a data format, or a data type used by the target operator, and a tensor shape, and identifiers of the optimal service logic of the target operator form the identifier of the target operator according to a hierarchical sequence of the n layers; and cache the identifier of the target operator.

12. The apparatus according to any one of claims 9 to 11, wherein the searching module is configured to:
obtain n information tables corresponding to the n layers of service logic, wherein an information table corresponding to service logic at the i^{th} layer comprises information about each piece of service logic at the i^{th} layer, for each piece of service logic at the i^{th} layer, the information about the service logic comprises storage address information of the service logic and address information of an information sub-table, and the information sub-table comprises information about service logic at the (i+1)^{th} layer that is subordinate to the service logic; and an information table at the n^{th} layer comprises information about each piece of service logic at the n^{th} layer, and for each piece of service logic at the n^{th} layer, the information about the service logic comprises storage address information of the service logic and an executable handle bound to the service logic; and
based on the n information tables and the indexes, search for the service logic corresponding to the target operator across the n layers, and search for the executable handle bound to the n^{th}-layer service logic of the target operator.

13. A method for searching for an operator, wherein the method is applied to a host, the host is connected to an external compute unit, and the method comprises:
obtaining an identifier of a target operator;
obtaining, from the identifier of the target operator, indexes of the target operator in n layers of service logic, wherein the n layers of service logic is run on the host, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of an operator, and i is greater than or equal to 1 and is less than or equal to n-1; and
based on the indexes, searching for service logic corresponding to the target operator across the n layers, and searching for an executable handle bound to n^{th}-layer service logic of the target operator.

14. The method according to claim 13, wherein obtaining the identifier of the target operator comprises:
obtaining the cached identifier of the target operator.

15. The method according to claim 14, wherein before obtaining the cached identifier of the target operator, the method further comprises:
determining, layer by layer, optimal service logic of the target operator in the n layers of service logic based on parameter information of the target operator, wherein the parameter information comprises one or more of a specific parameter, a data format, or a data type used by the target operator, and a tensor shape, and identifiers of the optimal service logic of the target operator form the identifier of the target operator according to a hierarchical sequence of the n layers; and
caching the identifier of the target operator.

16. The method according to any one of claims 13 to 15, wherein based on the indexes, searching for the service logic corresponding to the target operator across the n layers, and searching for the executable handle bound to the n^{th}-layer service logic of the target operator comprises:
obtaining n information tables corresponding to the n layers of service logic, wherein an information table corresponding to service logic at the i^{th} layer comprises information about each piece of service logic at the i^{th} layer, for each piece of service logic at the i^{th} layer, the information about the service logic comprises storage address information of the service logic and address information of an information sub-table, and the information sub-table comprises information about service logic at the (i+1)^{th} layer that is subordinate to the service logic; and an information table at the n^{th} layer comprises information about each piece of service logic at the n^{th} layer, and for each piece of service logic at the n^{th} layer, the information about the service logic comprises storage address information of the service logic and an executable handle bound to the service logic; and
based on the n information tables and the indexes, searching for the service logic corresponding to the target operator across the n layers, and searching for the executable handle bound to the n^{th}-layer service logic of the target operator.

17. An apparatus for searching for an operator, wherein the apparatus is used in a host, the host is connected to an external compute unit, and the apparatus comprises:
an obtaining module, configured to obtain an identifier of a target operator; and
obtain, from the identifier of the target operator, indexes of the target operator in n layers of service logic, wherein the n layers of service logic is run on the host, there is a subordinate relationship between each piece of service logic at an (i+1)^{th} layer and one piece of service logic at an i^{th} layer in the n layers, service logic at an n^{th} layer is bound to an executable handle in a one-to-one manner, the executable handle is configured to execute service logic that is run on the external compute unit and that is of an operator, and i is greater than or equal to 1 and is less than or equal to n-1; and
a determining module, configured to: based on the indexes, search for service logic corresponding to the target operator across the n layers, and search for an executable handle bound to n^{th}-layer service logic of the target operator.

18. The apparatus according to claim 17, wherein the obtaining module is configured to obtain the cached identifier of the target operator.

19. The apparatus according to claim 18, wherein the obtaining module is further configured to: before the cached identifier of the target operator is obtained, determine, layer by layer, optimal service logic of the target operator in the n layers of service logic based on parameter information of the target operator, wherein the parameter information comprises one or more of a specific parameter, a data format, or a data type used by the target operator, and a tensor shape, and identifiers of the optimal service logic of the target operator form the identifier of the target operator according to a hierarchical sequence of the n layers; and cache the identifier of the target operator.

20. The apparatus according to any one of claims 17 to 19, wherein the determining module is configured to:
obtain n information tables corresponding to the n layers of service logic, wherein an information table corresponding to service logic at the i^{th} layer comprises information about each piece of service logic at the i^{th} layer, for each piece of service logic at the i^{th} layer, the information about the service logic comprises storage address information of the service logic and address information of an information sub-table, and the information sub-table comprises information about service logic at the (i+1)^{th} layer that is subordinate to the service logic; and an information table at the n^{th} layer comprises information about each piece of service logic at the n^{th} layer, and for each piece of service logic at the n^{th} layer, the information about the service logic comprises storage address information of the service logic and an executable handle bound to the service logic; and
based on the n information tables and the indexes, search for the service logic corresponding to the target operator across the n layers, and search for the executable handle bound to the n^{th}-layer service logic of the target operator.

21. A compute device, comprising a processor and a memory, wherein the processor is configured to execute instructions stored in the memory, to enable the compute device to perform the method for loading the operator according to any one of claims 1 to 6, or the method for searching for the operator according to any one of claims 13 to 16.

22. A computer-readable storage medium, comprising computer program instructions, wherein when the computer program instructions are executed by a compute device, the compute device performs the method for loading the operator according to any one of claims 1 to 6, or the method for searching for the operator according to any one of claims 13 to 16.
